# EUROPEAN PATENT APPLICATION

(11) **EP 4 119 635 A1**
(43) Date of publication of application: **18.01.2023**
(21) Application number: 21768843.1
(22) Date of filing: 03.03.2021
(51) Int. Cl.: C09K 21/02, C09K 21/08, C09K 21/12, C08K 5/03, C08K 5/521, C08K 5/524, C08L 25/04, C08J 9/04

(54) **FLAME RETARDANT COMPOSITION FOR FOAMED STYRENE RESIN, FLAME-RETARDANT FOAMED-STYRENE-BASED RESIN COMPOSITION, AND EXTRUDED FOAM MOLDED PRODUCT THEREOF**

(30) Priority: 09.03.2020 JP 2020040054; 26.08.2020 JP 2020142660
(71) Applicant: DKS Co. Ltd., Kyoto-shi, Kyoto 600-8873 (JP)
(72) Inventor: MORISHITA Ken, Kyoto-shi, Kyoto 600-8873 (JP); AKIYAMA Koichi, Kyoto-shi, Kyoto 600-8873 (JP)
(74) Representative: Hoffmann Eitle
(86) International application number: PCT/JP2021/008178
(87) International publication number: WO 2021/182237

(57) **Abstract**

Provided are a flame retardant composition for expandable styrene resin with which an extrusion-foamed molded article having excellent flame retardancy and excellent heat resistance can be produced; a styrene-based resin composition; and an extrusion-foamed molded article of the styrene-based resin composition. The flame retardant composition for expandable styrene resin of the present invention comprises at least (B1) tetrabromobisphenol A-bis(2,3-dibromo-2-methylpropyl ether), (C) a zinc-modified hydrotalcite, and (D) a phosphoric acid ester-based compound, the component (B1) being contained in an amount of 10 to 98 mass% based on the total amount of the component (B1) and the component (D).

## Description

### Technical Field

The present invention relates to a flame retardant composition for expandable styrene resin, a flame-retardant expandable styrene-based resin composition, and an extrusion-foamed molded article of the composition.

### Background Art

Styrene-based resin foamed articles, which are lightweight, have been used in various applications, including heat insulation applications for home electrical appliances, building materials, or the like, and civil engineering applications such as an embankment method. Styrene-based resins are made of carbon and hydrogen alone, and burn intensely with generation of black smoke once ignited. For this reason, a flame retardant must be used to impart flame retardancy to the resins depending on the application of styrene-based resin foamed articles.

Hexabromocyclododecane (HBCD) has been used as a flame retardant to impart flame retardancy to styrene-based resin foamed articles produced by an extrusion method, and it is known that a desired flame retardancy effect can be obtained with a relatively small amount of HBCD. On the other hand, HBCD has low heat stability; thus, when a resin composition containing HBCD is heated to or above the melting temperature, HBr produced by decomposition of HBCD colors the resin, degrading its quality, and can also promote corrosion of manufacturing equipment etc. Additionally, it is desirable that scraps of foamed articles and scraps generated during the production of foamed articles are recycled as a starting material for the production of new foamed articles. However, if a flame retardant with low heat stability, such as HBCD, is contained in scraps, it causes coloration when the scraps are melted, or promotes depolymerization. Thus, foamed articles containing HBCD have a problem that they are difficult to recycle.

From this point of view, the use of other bromine-based flame retardants in place of HBCD for styrene-based resin extrusion-foamed articles has recently been considered. As such a bromine-based flame retardant, tetrabromobisphenol A-bis(2,3-dibromo-2-methylpropyl ether) has been proposed. This flame retardant has a flame retardancy effect comparable to that of HBCD; however, in order to further improve the heat stability, it has been proposed to use the flame retardant in combination with another flame retardant, such as tetrabromobisphenol A-bis(2,3-dibromopropyl ether) or tris(2,3-dibromopropyl)isocyanurate. This suppresses the decomposition of the flame retardant and makes it less likely that the degradation of the resin will occur, while maintaining the excellent flame retardancy effect (see, for example, PTL 1 to PTL 3).

### Citation List

### Patent Literature

PTL 1: JP2010-275528A
PTL 2: JP2012-107227A
PTL 3: JP2012-136674A

### Summary of Invention

### Technical Problem

However, various recent applications using styrene-based foamed molded articles require further improvement in the flame retardancy and heat resistance of the foamed articles. From this perspective, there is an urgent need to develop a flame retardant to further enhance the flame retardancy and heat resistance of foamed articles or to develop a resin composition for producing styrene-based resin foamed articles.

The present invention has been accomplished in view of the above. An object of the invention is to provide a flame retardant composition for expandable styrene resin that can be used to produce a foamed molded article with excellent flame retardancy and excellent heat resistance, a flame-retardant expandable styrene-based resin composition, and an extrusion-foamed molded article of the composition.

### Solution to Problem

The present inventors conducted extensive research to achieve the above object, and found that the object can be achieved by combining at least a specific flame retardant and a specific phosphoric acid ester-based compound. The invention has thus been accomplished.

Specifically, the present invention includes, for example, the subject matter described in the following items.
Item 1 A flame retardant composition for expandable styrene resin, comprising at least the following components (B1), (C), and (D):
   (B1) tetrabromobisphenol A-bis(2,3-dibromo-2-methylpropyl ether);
   (C) a zinc-modified hydrotalcite; and
   (D) a phosphoric acid ester-based compound,
      the component (B1) being contained in an amount of 10 to 98 mass% based on the total amount of the component (B1) and the component (D).
Item 2 The flame retardant composition for expandable styrene resin according to Item 1, wherein the component (D) is at least one member selected from the group consisting of aliphatic phosphates, aromatic phosphates, and aromatic phosphites.
Item 3 The flame retardant composition for expandable styrene resin according to Item 1 or 2, wherein the flame retardant composition comprises a component (B2) as a flame retardant in addition to the component (B1), and the component (B2) comprises at least one member selected from the group consisting of tetrabromobisphenol A-bis(2,3-dibromopropyl ether), tris(2,3-dibromopropyl)isocyanurate, tris(tribromophenoxy)triazine, and brominated epoxy oligomer.
Item 4 The flame retardant composition for expandable styrene resin according to any one of Items 1 to 3, wherein the content of the component (B1) is 80 to 99 mass% based on the total amount of the component (B1) and the component (C).
Item 5 A flame-retardant expandable styrene-based resin composition comprising the flame retardant composition for expandable styrene resin according to any one of Items 1 to 4, and a styrene-based resin as a component (A).
Item 6 The flame-retardant expandable styrene-based resin composition according to Item 5, wherein the component (D) is contained in an amount of 0.05 parts by mass or more and 10 parts by mass or less, based on 100 parts by mass of the component (A).
Item 7 An extrusion-foamed molded article of the flame-retardant expandable styrene-based resin composition according to Item 5 or 6.
Item 101 A flame-retardant expandable styrene-based resin composition comprising at least the following components (A) to (D) :
   (A) a styrene-based resin;
   (B1) tetrabromobisphenol A-bis(2,3-dibromo-2-methylpropyl ether);
   (C) a zinc-modified hydrotalcite; and
   (D) a phosphoric acid ester-based compound,
      the component (B1) being contained in an amount of 10 to 98 mass% based on the total amount of the component (B1) and the component (D).
Item 102 The flame-retardant expandable styrene-based resin composition according to Item 101, wherein the component (D) is at least one member selected from the group consisting of aliphatic phosphates, aromatic phosphates, and aromatic phosphites.
Item 103 The flame-retardant expandable styrene-based resin composition according to Item 101 or 102, wherein the flame-retardant expandable styrene-based resin composition comprises a component (B2) as a flame retardant in addition to the component (B1), and the component (B2) comprises at least one member selected from the group consisting of tetrabromobisphenol A-bis(2,3-dibromopropyl ether), tris(2,3-dibromopropyl)isocyanurate, tris(tribromophenoxy)triazine, and brominated epoxy oligomer.
Item 104 The flame-retardant expandable styrene-based resin composition according to any one of Items 101 to 103, wherein the component (D) is contained in an amount of 0.05 parts by mass or more and 10 parts by mass or less, based on 100 parts by mass of the component (A).
Item 105 The flame-retardant expandable styrene-based resin composition according to any one of Items 101 to 104, wherein the content of the component (B1) is 80 to 99 mass% based on the total amount of the component (B1) and the component (C).
Item 106 An extrusion-foamed molded article of the flame-retardant expandable styrene-based resin composition according to any one of Items 101 to 105.

### Advantageous Effects of Invention

By using the flame retardant composition for expandable styrene resin of the present invention, an extrusion-foamed molded article with excellent flame retardancy and excellent heat resistance can be produced. Moreover, an extrusion-foamed molded article obtained using a flame-retardant expandable styrene-based resin composition containing the flame retardant composition for expandable styrene resin has excellent flame retardancy and excellent heat resistance.

### Description of Embodiments

The following describes embodiments of the present invention in detail. In the present specification, the terms "comprise" and "contain" include the concepts of comprising, containing, consisting essentially of, and consisting of.

### 1. Flame Retardant Composition for Expandable Styrene Resin

The flame retardant composition for expandable styrene resin of the present invention contains at least the following components (B1), (C), and (D):
(B1) tetrabromobisphenol A-bis(2,3-dibromo-2-methylpropyl ether);
(C) a zinc-modified hydrotalcite; and
(D) a phosphoric acid ester-based compound.

In particular, the flame retardant composition for expandable styrene resin of the present invention contains the component (B1) in an amount of 10 to 98 mass% based on the total amount of the component (B1) and the component (D).

By incorporating the flame retardant composition for expandable styrene resin of the present invention as a flame retardant into a styrene resin, an extrusion-foamed molded article with excellent flame retardancy and excellent heat resistance can be produced.

Below, the flame retardant composition for expandable styrene resin of the present invention is simply referred to as "the flame retardant composition," the flame-retardant expandable styrene-based resin composition comprising the flame retardant composition for expandable styrene resin of the present invention is simply referred to as "the styrene-based resin composition," and the extrusion-foamed molded article obtained by using the styrene-based resin composition is simply referred to as "the foamed molded article."

### Component (B1)

The component (B1) contained in the flame retardant composition is tetrabromobisphenol A-bis(2,3-dibromo-2-methylpropyl ether), which serves as a flame retardant. That is, the component (B1) is a bromine-based flame retardant.

The component (B1) can be produced by a known method or can be obtained from a commercial product or the like.

### Other Flame Retardants

The flame retardant composition may also contain a flame retardant other than the component (B1) as long as the effects of the present invention are not impaired. In this case, flame retardancy and heat resistance may be improved. An example of a flame retardant other than the component (B1) is a bromine-based flame retardant other than the component (B1). The bromine-based flame retardant is referred to below as "the component (B2)."

Examples of the component (B2) include tetrabromobisphenol A-bis(2,3-dibromopropyl ether), tris(2,3-dibromopropyl)isocyanurate, tris(tribromophenoxy)triazine, tetrabromobisphenol S-bis(2,3-dibromopropyl ether), tetrabromobisphenol F-bis(2,3-dibromopropyl ether), tetrabromobisphenol A, hexabromobenzene, pentabromotoluene, polybromodiphenyl ether, polybromodiphenylethane, bispolybromophenoxyethane, tris(tribromophenoxy)triazine, polybromophenylindane, polypentabromobenzyl acrylate, ethylene bistetrabromophthalimide, tris(tribromoneopentyl)phosphate, brominated epoxy oligomer, and the like. The components (B2) may be used singly or in a combination of two or more.

The component (B2) preferably comprises at least one member selected from the group consisting of tetrabromobisphenol A-bis(2,3-dibromopropyl ether), tris(2,3-dibromopropyl)isocyanurate, tris(tribromophenoxy)triazine, and brominated epoxy oligomer, in terms of easily improving the flame retardancy and heat resistance of the foamed molded article of the flame retardant composition.

When the flame retardant composition contains both the component (B1) and the component (B2), the content ratio of the two is not particularly limited. For example, the content of the component (B1) may be 20 to 100 mass% based on the total mass of the component (B1) and the component (B2). The content of the component (B1) is preferably 25 mass% or more, more preferably 30 mass% or more, even more preferably 35 mass% or more, and particularly preferably 40 mass% or more, based on the total mass of the component (B1) and the component (B2). The content of the component (B1) is also preferably 95 mass% or less, more preferably 90 mass% or less, and even more preferably 80 mass% or less, based on the total mass of the component (B1) and the component (B2).

The flame retardant composition may contain a flame retardant other than the component (B1) and the component (B2). Examples include a wide range of known flame retardants. When the flame retardant composition contains a flame retardant other than the component (B1) and the component (B2), the content is not particularly limited and can be appropriately adjusted within a range that does not impair the effects of the present invention. From the viewpoint of keeping costs down, the content of the flame retardant may be 10 mass% or less, preferably 5 mass% or less, and more preferably 1 mass% or less, based on the total mass of the component (B1) and the component (B2). The flame retardant composition may contain only the component (B1) and the component (B2) as flame retardants.

### Component (C)

The component (C) contained in the flame retardant composition is a zinc-modified hydrotalcite. Since the flame retardant composition contains the component (C), the effect of flame retardants such as the component (B1) can be further enhanced, and the flame retardancy and heat resistance of the foamed molded article of the styrene-based resin composition can be further improved. For example, the component (C) accelerates the decomposition of flame retardants such as the component (B1).

The zinc-modified hydrotalcite may be, for example, a layered double hydroxide in which Mg in hydrotalcite Mg₆Al₂(OH)₁₆(CO₃)·4H₂O is partially replaced by Zn. In general, the zinc-modified hydrotalcite can be represented by the following formula (1):

[MgₐZn_{b}Alₓ(OH)₂]^{x+}(Aⁿ⁻)_{x/n}·mH₂O.

In formula (1), 0.5 ≤ a + b <1.0, 0 < x ≤ 0.5, a + b = 1 - x, and m is a positive number. A is an n-valent anion (n = 1 to 4, preferably 1 or 2). Aⁿ⁻ is preferably a carbonate ion (CO₃²⁻).

As represented by formula (1), the entire zinc-modified hydrotalcite is electrically neutral due to the positive charge in the base layers of the metal double hydroxide and the negative charge of the anion in the intermediate layer of the metal double hydroxide.

The zinc-modified hydrotalcite can be obtained by a known method or can be obtained from a commercial product. Examples of commercial products include ZHT-4A (Mg₃ZnAl₂(OH)₁₂CO₃·mH₂O) provided by Kyowa Chemical Industry Co., Ltd., STABIACE HT-7 (Mg_{3.5}Zn_{0.5}Al₂(OH)₁₂CO₃·mH₂O) provided by Sakai Chemical Industry Co., Ltd., and the like. Zinc-modified hydrotalcites in which the atomic ratio of Mg and Zn to Al differs from those of these commercial products can be synthesized from water-soluble salts of Mg, Zn, and Al by a known method called "coprecipitation."

The zinc-modified hydrotalcites may be used singly or in a combination of two or more.

The zinc-modified hydrotalcite may be treated with a surface treatment agent. In this case, the zinc-modified hydrotalcite is easily dispersed uniformly in styrene-based resin, and the action of the zinc-modified hydrotalcite is easily exhibited. The type of surface treatment agent is not particularly limited. Examples of surface treatment agents include higher fatty acids, such as stearic acid, oleic acid, and lauric acid; higher fatty acid metal salts, such as sodium stearate and sodium oleate; anionic surfactants, such as sodium lauryl benzene sulfonate; silane coupling agents, such as vinyltriethoxysilane and γ-methacryloylpropyltriethoxysilane; titanate coupling agents, such as isopropyl triisostearoyl titanate and isopropyl tridecylbenzenesulfonyl titanate; glycerin fatty acid esters, such as glycerin monostearate and glycerin monooleate; higher fatty acid amides, such as stearamide; wax; and the like.

In the flame retardant composition, the content ratio of the component (C) and the component (B1) is not particularly limited. For example, the content of the component (B1) may be 80 to 99 mass% based on the total amount of the component (B1) and the component (C). In this case, the effect of the component (B1) as a flame retardant is easily enhanced. The content of the component (B1) is preferably 82 mass% or more, more preferably 84 mass% or more, and even more preferably 86 mass% or more, based on the total amount of the component (B1) and the component (C). The content of the component (B1) is also preferably 98 mass% or less, more preferably 97 mass% or less, and even more preferably 96 mass% or less, based on the total amount of the component (B1) and the component (C).

### Component (D)

The component (D) contained in the flame retardant composition is a phosphoric acid ester-based compound. Since the flame retardant composition contains the component (D), the effect of flame retardants such as the component (B1) can be further enhanced, and the flame retardancy and heat resistance of the foamed molded article of the styrene-based resin composition can be further improved.

The phosphoric acid ester-based compound encompasses phosphoric acid esters and phosphorous acid esters.

The type of phosphoric acid ester-based compound is not particularly limited. Examples include a wide range of known phosphoric acid ester-based compounds. In particular, in terms of easily improving the flame retardancy and heat resistance of the foamed molded article of the styrene-based resin composition, the phosphoric acid ester-based compound is preferably at least one member selected from the group consisting of aliphatic phosphates, aromatic phosphates, and aromatic phosphites, and more preferably at least one member selected from the group consisting of aliphatic phosphates and aromatic phosphates.

The aliphatic phosphate may or may not contain halogen. Examples of halogen-free aliphatic phosphates include trimethyl phosphate, triethyl phosphate, tributyl phosphate, tri(2-ethylhexyl phosphate), tri(2-ethylhexyl phosphate), tributoxyethyl phosphate, monoisodecyl phosphate, and like trialkyl phosphates, and also include 2-acryloyloxyethyl acid phosphate, 2-methacroyloxyethyl acid phosphate, and the like. Examples of halogen-containing aliphatic phosphates include tris(tribromoneopentyl)phosphate, tris(chloroethyl)phosphate, tris(chloropropyl phosphate), tris(dichloropropyl phosphate), tetrakis(2-chloroethyl)ethylene diphosphate, tetrakis(2-chloroethyl)dichloroisopentyl diphosphate, bis(tribromoneopentyl)dichloropropyl phosphate, monobromoneopentyldi(chloropropyl)phosphate, di(monobromoneopentyl)chloropropyl phosphate, monobromoneopentyldi(chloroethyl)phosphate, di(monobromoneopentyl)chloroethyl phosphate, and the like. In particular, the aliphatic phosphate is preferably a halogen-containing aliphatic phosphate, and particularly preferably tris(tribromoneopentyl)phosphate.

The aromatic phosphate may or may not contain halogen. Examples of halogen-free aromatic phosphates include triphenyl phosphate, tricresyl phosphate, trixylenyl phosphate, tris(isopropylphenyl) phosphate, tris(phenylphenyl) phosphate, trinaphthyl phosphate, cresyl diphenyl phosphate, xylenyl diphenyl phosphate, diphenyl(2-ethylhexyl) phosphate, cresyl di-2 6-xylenyl phosphate, diphenyl(2-acryloyloxyethyl) phosphate, diphenyl(2-methacroyloxyethyl) phosphate, resorcinol bis(diphenyl phosphate), resorcinol bis(dixylenyl phosphate), resorcinol bis(dicresyl phosphate), bisphenol A bis(diphenyl phosphate), bisphenol A bis(dixylenyl phosphate), bisphenol A bis(dicresyl phosphate), and t-butylated phenyl phosphate. Examples of halogen-containing aromatic phosphates include tris(bromophenyl)phosphate, bis(tribromoneopentyl)phenyl phosphate, bis(tribromoneopentyl)cresyl phosphate, and the like. In particular, the aromatic phosphate is preferably triphenyl phosphate and/or tricresyl phosphate.

In the present invention, when the component (D) is an aromatic phosphite, the aromatic phosphite may be, for example, a compound represented by the following formula (2).

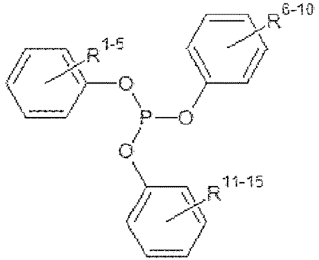

In formula (2), R¹⁻⁵ means that R¹, R², R³, R⁴, and R⁵ are attached to five carbon atoms of an aromatic ring, respectively. In formula (2), R⁶⁻¹⁰ means that R⁶, R⁷, R⁸, R⁹, and R¹⁰ are attached to five carbon atoms of an aromatic ring, respectively. In formula (2), R¹¹⁻¹⁵ means that R¹¹, R¹², R¹³, R¹⁴, and R¹⁵ are attached to five carbon atoms of an aromatic ring, respectively. R¹ to R¹⁵ are the same or different, and each represents an alkyl group having 3 or fewer carbon atoms or a hydrogen atom.

The aromatic phosphite may not contain halogen. Examples of halogen-free aromatic phosphites include triphenyl phosphite, tricresyl phosphite, trixylenyl phosphite, tris(isopropylphenyl) phosphite, diphenyl cresyl phosphite, diphenyl xylenyl phosphite, and the like. In particular, the aromatic phosphite is preferably triphenyl phosphite and/or tricresyl phosphite.

The phosphoric acid ester-based compound as the component (D) can be obtained by a known production method or can be obtained from a commercial product.

The phosphoric acid ester-based compounds may be used singly or in a combination of two or more.

In the flame retardant composition, the content ratio of the component (D) and the component (B1) is not particularly limited. For example, the content of the component (B1) may be 10 to 98 mass% based on the total amount of the component (B1) and the component (D). In this case, the effect of the component (B1) as a flame retardant is easily enhanced. The content of the component (B1) is preferably 20 mass% or more, more preferably 25 mass% or more, even more preferably 30 mass% or more, and particularly preferably 40 mass% or more, based on the total amount of the component (B1) and the component (D). The content of the component (B1) is also preferably 95 mass% or less, more preferably 80 mass% or less, even more preferably 75 mass% or less, and particularly preferably 70 mass% or less, based on the total amount of the component (B1) and the component (D).

The flame retardant composition may contain a phosphoric acid ester compound other than aliphatic phosphates, aromatic phosphate, and aromatic phosphites. In this case, the content of the phosphoric acid ester compound is 10 mass% or less, preferably 5 mass% or less, and more preferably 1 mass% or less, based on the total mass of the phosphoric acid ester compounds.

### Component (E)

The flame retardant composition may contain, for example, a heat stabilizer as a component (E) in addition to the components (A) to (D). It is also possible for the flame retardant composition not to contain the component (E) and for the styrene-based resin composition described later to contain the component (E). The heat stabilizer can further improve the heat stability of the foamed molded article.

The type of heat stabilizer is not particularly limited. For example, a wide range of known heat stabilizers usable for foamed molded articles can be used. Examples of heat stabilizers include phosphite compounds, thioether compounds, hindered phenol compounds, hindered amine compounds, organotin compounds, phosphoric acid esters, hydrotalcites, and the like. However, the phosphite compound as the heat stabilizer (the component (E)) means a compound other than the phosphite compounds included in the component (D). That is, the phosphite compound as the heat stabilizer (the component (E)) is a phosphite compound other than the compound represented by formula (2) above.

Examples of phosphite compounds as the heat stabilizer include trimethyl phosphite, triethyl phosphite, tributyl phosphite, tri(2-ethylhexyl) phosphite, tristearyl phosphite, and like trialkyl phosphites, and also include 2-ethylhexyl diphenyl phosphite, isodecyl diphenyl phosphite, and like alkyl allyl phosphites, tris(2,4-di-tert-butylphenyl)phosphite, trinonylphenyl phosphite, bis(2,4-di-tert-butylphenyl)pentaerythritol diphosphite, bis[2,4-bis(1,1-dimethylethyl)-6-methylphenyl]ethyl phosphite, tetrakis(2,4-di-tert-butylphenyl)[1,1-biphenyl]-4,4'-diylbisphosphonite, bis(nonylphenyl)pentaerythritol diphosphite, bisstearyl pentaerythritol diphosphite, bis(2,6-di-tert-butyl-4-methylphenyl)pentaerythritol diphosphite, 2,2'-methylenebis(4,6-di-tert-butyl-1-phenyloxy)(2-ethylhexyloxy)phosphorus, tetra(tridecyl)-4,4'-butylidene-bis(2-tert-butyl-5-methylphenyl)diphosphite, hexatridecyl-1,1,3-tris(3-tert-butyl-6-methyl-4-oxyphenyl)-3-methylpropane triphosphite, mono(dinonylphenyl)mono-p-nonylphenyl phosphite, tris(monononylphenyl)phosphite, tetra(C₁₂₋₁₆)alkyl-4,4'-isopropylidene-(bisphenyl)diphosphite, and the like.

Examples of thioether compounds include dilauryl-3,3'-thiodipropionate, dimyristyl-3,3'-thiodipropionate, distearyl-3,3'-thiodipropionate, pentaerythritol tetrakis(3-laurylthiopropionate), ditridecyl-3,3'-thiodipropionate, 2-mercaptobenzimidazole, and the like.

Examples of hindered phenol compounds include 1,6-hexanediol-bis[3-(3,5-di-tert-butyl-4-hydroxyphenyl)propionate], triethylene glycol-bis[3-(3-tert-butyl-5-methyl-4-hydroxyphenyl)propionate], glycerin tris[3-(3,5-di-tert-butyl-4-hydroxyphenyl)-propionate], pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphonate, calcium diethylbis[[3,5-bis (1,1-dimethylethyl)-4-hydroxyphenyl]methyl]phosphonate, 3,3',3",5,5',5"-hexa-tert-butyl-a,a',a"-(mesitylene-2,4,6-triyl)tri-p-cresol, 4,6-bis(octylthiomethyl)-o-cresol, ethylenebis(oxyethylene)bis[3-(5-tert-butyl-4-hydroxy-m-tolyl)propionate], hexamethylenebis[3-(3,5-di-tert-butyl-4-hydroxyphenyl)propionate], 1,3,5-tris(3,5-di-tert-butyl-4-hydroxybenzyl)-1,3,5-triazine-2,4,6(1H,3H,5H)-trione, 1,3,5-tris[(4-tert-butyl-3-hydroxy-2,6-xylyl)methyl]-1,3,5-triazine-2,4,6(1H,3H,5H)-trione, 2,6-di-tert-butyl-4-(4,6-bis(octylthio)-1,3,5-triazin-2-ylamino)phenol, and the like.

Examples of hindered amine compounds include 4-benzoyloxy-2,2,6,6-tetramethylpiperidine, bis(2,2,6,6-tetramethyl-4-piperidinyl)sebacate, bis(1,2,2,6,6-pentamethyl-4-piperidinyl)sebacate, bis(1,2,2,6,6-pentamethyl-4-piperidinyl)-2-(3,5-di-tert-butyl-4-hydroxybenzyl-2-n-butylmalonate), tetrakis(2,2,6,6-tetramethyl-4-piperidinyl-1,2,3,4-butanetetracarboxylate), tetrakis(1,2,2,6,6-pentamethyl-4-piperidinyl)-1,2,3,4-butanetetracarboxylate, and the like.

Examples of organotin compounds include dioctyltin dilaurate, dioctyltin maleate, and the like.

In the flame retardant composition, the content of the component (E) is not particularly limited, and may be a suitable amount within a range that does not impair the effects of the present invention. For example, the content of the component (E) is 0.1 to 50 mass%, and preferably 1 to 30 mass%, based on the total mass of the component (B1).

### Component (F)

The flame retardant composition may contain, for example, a flame retardancy enhancer as a component (F) in addition to the components (A) to (D). It is also possible for the flame retardant composition not to contain the component (F) and for the styrene-based resin composition described later to contain the component (F). The flame retardancy enhancer can further improve the heat stability of the foamed molded article.

The type of flame retardancy enhancer is not particularly limited. For example, a wide range of known flame retardancy enhancers usable for foamed molded articles can be used. Examples of flame retardancy enhancers include cumene peroxide, cumene hydroperoxide, di-tert-butyl peroxide, di-tert-hexyl peroxide, 2,5-dimethyl-2,5-di(tert-butyl peroxy)-hexyne-3, dicumyl peroxide, 2,3-dimethyl-2,3-diphenylbutane, and the like, and also include phthalocyanine metal complexes, such as phthalocyanine iron, phthalocyanine manganese, and phthalocyanine cobalt, zeolite, and the like.

In the flame retardant composition, the content of the component (F) is not particularly limited, and may be a suitable amount within a range that does not impair the effects of the present invention. For example, the content of the component (F) is 0.1 to 15 mass%, and preferably 1 to 10 mass%, based on the total mass of the component (B1).

### Component (H)

The flame retardant composition may contain, for example, a foam nucleating agent as a component (H) in addition to the components (A) to (D). It is also possible for the flame retardant composition not to contain the component (H) and for the styrene-based resin composition described later to contain the component (H). The foam nucleating agent is useful for adjusting the strength etc. of the foamed molded article of the styrene-based resin composition because it makes it easy to form cells in the foamed molded article and also makes it easy to adjust the cell diameter.

The type of foam nucleating agent is not particularly limited. For example, a wide range of known foam nucleating agents usable for foamed molded articles can be used. Examples of foam nucleating agents include talc, bentonite, kaolin, mica, silica, clay, diatomaceous earth, and like inorganic materials.

### Other Components

The flame retardant composition may contain various other components within a range that does not impair the effects of the present invention, in addition to the above components. When the flame retardant composition contains other components, the content thereof is not particularly limited, and is, for example, 10 mass% or less, preferably 5 mass% or less, and more preferably 1 mass% or less, based on the total mass of the component (B1), the component (C), and the component (D).

The method for preparing the flame retardant composition is not particularly limited, and may be, for example, the same as a method for preparing known flame retardant compositions.

### 2. Flame-Retardant Expandable Styrene-Based Resin Composition

The flame-retardant expandable styrene-based resin composition ("styrene-based resin composition") of the present invention contains the flame retardant composition and further contains a styrene-based resin as a component (A). That is, the composition contains the components (A), (B1), (C), and (D):
(A) a styrene-based resin;
(B1) tetrabromobisphenol A-bis(2,3-dibromo-2-methylpropyl ether);
(C) a zinc-modified hydrotalcite; and
(D) a phosphoric acid ester-based compound.

The styrene-based resin composition of the present invention can be formed into a foamed article by melting the composition in an extruder, introducing a foaming agent under pressure into the melt, and then extruding the melt. The foamed article has excellent flame retardancy and excellent heat resistance. That is, an extrusion-foamed molded article with excellent flame retardancy and excellent heat resistance can be produced using the styrene-based resin composition of the present invention.

The component (A) contained in the styrene-based resin composition is a styrene-based resin. The styrene-based resin is the main component of the styrene-based resin composition, i.e., the main component of the foamed molded article.

The type of styrene-based resin is not particularly limited. For example, a wide range of known styrene-based resins used for foam molding can be used.

Examples of styrene-based resins include homopolymers of a styrene monomer and copolymers of styrene with other monomers. Examples of the other monomers include styrene-based polymerizable monomers, such as o-methylstyrene, m-methylstyrene, p-methylstyrene, 2,4-dimethylstyrene, ethylstyrene, p-tert-butylstyrene, α-methylstyrene, α-methyl-p-methylstyrene, 1,1-diphenylethylene, p-(N,N-diethylaminoethyl)styrene, and p-(N,N-diethylaminomethyl)styrene. The other monomers may be used singly or in a combination of two or more.

The monomer units constituting the styrene-based resin may contain a styrene monomer in an amount of 50 mass% or more, preferably 70 mass% or more, more preferably 80 mass% or more, even more preferably 90 mass% or more, and particularly preferably 95 mass% or more. The styrene-based resin may be a homopolymer of polystyrene.

The styrene-based resin may also contain other components as long as the effects of the present invention are not impaired. Examples of the other components include rubbery polymers. Examples of rubbery polymers include polybutadiene, polyisoprene, styrene-butadiene copolymer, styrene-isoprene copolymer, acrylonitrile-butadiene copolymer, styrene-isobutylene-butadiene-based copolymer, butadiene-(meth)acrylate copolymer, styrene-butadiene block copolymer, styrene-isoprene block copolymer, butyl rubber, ethylene-α-olefin-based copolymer (ethylene-propylene rubber), ethylene-α-olefin-polyene copolymer (ethylene-propylene-diene rubber), silicone rubber, acrylic rubber, hydrogenated diene-based rubber (e.g., hydrogenated styrene-butadiene block copolymer and hydrogenated butadiene-based polymer), and the like.

The styrene-based resin may contain one rubbery polymer or two or more rubbery polymers. When the styrene-based resin composition contains a rubbery polymer, the content of the rubbery polymer is preferably 30 mass% or less, more preferably 20 mass% or less, and even more preferably 10 mass% or less, based on the monomer components constituting the styrene-based resin.

For example, the molecular weight of the styrene-based resin is not particularly limited, and can be adjusted to an appropriate molecular weight within the range in which foam molding is possible, depending on the intended use etc. For example, the molecular weight of the styrene-based resin may be in the same range as that of known foamed molded articles.

The styrene-based resin may further contain other additives as long as the effects of the present invention are not impaired. Examples of additives include light stabilizers, antioxidants, preservatives, surfactants, fillers such as inorganic particles, pigments, colorants, antifungal agents, and the like. One or more of these additives may be contained in the styrene-based resin. When the styrene-based resin contains other additives, the content thereof is preferably 10 mass% or less, more preferably 5 mass% or less, and even more preferably 1 mass% or less, based on the total mass of the styrene-based resin.

The method for producing the styrene-based resin is not particularly limited. For example, the styrene-based resin as the component (A) can be obtained by a known method. Alternatively, the styrene-based resin can be obtained from, for example, a commercial product.

The content of the component (B1) contained in the styrene-based resin composition is not particularly limited. The content of the component (B1) may be, for example, 0.05 parts by mass or more, preferably 0.1 parts by mass or more, more preferably 0.5 parts by mass or more, even more preferably 0.9 parts by mass or more, and particularly preferably 1 part by mass or more, based on 100 parts by mass of the styrene-based resin, in terms of easily improving flame retardancy and heat resistance. The content of the component (B1) contained in the styrene-based resin composition may also be 20 parts by mass or less, preferably 18 parts by mass or less, more preferably 10 parts by mass or less, even more preferably 5 parts by mass or less, still even more preferably 4 parts by mass or less, and particularly preferably 3 parts by mass or less, based on 100 parts by mass of the styrene-based resin, in terms of easily improving flame retardancy and heat resistance.

When the styrene-based resin composition contains both the component (B1) and the component (B2), the total mass of the component (B1) and the component (B2) is preferably, for example, 0.1 parts by mass or more and 20 parts by mass or less, based on 100 parts by mass of the styrene-based resin, in terms of easily improving the flame retardancy and heat resistance of the foamed molded article of the styrene-based resin composition. The total mass of the component (B1) and the component (B2) is preferably 1 part by mass or more, more preferably 1.5 parts by mass or more, even more preferably 2 parts by mass or more, and particularly preferably 2.5 parts by mass or more, based on 100 parts by mass of the styrene-based resin. The total mass of the component (B1) and the component (B2) is also preferably 10 parts by mass or less, more preferably 9 parts by mass or less, even more preferably 8 parts by mass or less, and particularly preferably 6 parts by mass or less, based on 100 parts by mass of the styrene-based resin.

The content of the component (C) in the styrene-based resin composition is not particularly limited. For example, the content of the component (C) may be 0.001 parts by mass or more, preferably 0.01 parts by mass or more, more preferably 0.05 parts by mass or more, even more preferably 0.08 parts by mass or more, and particularly preferably 0.1 parts by mass or more, based on 100 parts by mass of the styrene-based resin, in terms of easily improving flame retardancy and heat resistance. The content of the component (C) may be also 5 parts by mass or less, preferably 1 part by mass or less, more preferably 0.8 parts by mass or less, even more preferably 0.5 parts by mass or less, and particularly preferably 0.3 parts by mass or less, based on 100 parts by mass of the styrene-based resin, in terms of easily improving flame retardancy and heat resistance.

The content of the component (D) in the styrene-based resin composition is not particularly limited. For example, the content of the component (D) in the styrene-based resin composition is preferably 0.05 parts by mass or more and 10 parts by mass or less, based on 100 parts by mass of the styrene-based resin, in terms of easily improving flame retardancy and heat resistance. The content of the component (D) is preferably 0.1 parts by mass or more, more preferably 0.5 parts by mass or more, even more preferably 0.55 parts by mass or more, and particularly preferably 0.8 parts by mass or more, based on 100 parts by mass of the styrene-based resin. The content of the component (D) is also preferably 8 parts by mass or less, more preferably 6 parts by mass or less, even more preferably 4 parts by mass or less, and particularly preferably 3 parts by mass or less, based on 100 parts by mass of the styrene-based resin.

When the styrene-based resin composition contains the component (E), the content is not particularly limited. For example, the content of the component (E) may be 0.001 parts by mass or more, preferably 0.01 parts by mass or more, more preferably 0.02 parts by mass or more, and even more preferably 0.03 parts by mass or more, based on 100 parts by mass of the styrene-based resin, in terms of easily improving the heat stability of the foamed molded article. The content of the component (E) is also preferably 1 part by mass or less, more preferably 0.8 parts by mass or less, even more preferably 0.6 parts by mass or less, and particularly preferably 0.4 parts by mass or less, based on 100 parts by mass of the styrene-based resin, in terms of easily improving the heat stability of the foamed molded article.

When the styrene-based resin composition contains the component (F), the content is not particularly limited. For example, the content of the component (F) is preferably 0.01 parts by mass or more and 0.5 parts by mass or less, based on 100 parts by mass of the styrene-based resin, in terms of easily improving the flame retardancy of the foamed molded article.

When the styrene-based resin composition contains the component (H), the content is not particularly limited. For example, the content of the component (H) may be 0.1 parts by mass or more and 5 parts by mass or less, based on 100 parts by mass of the styrene-based resin.

The styrene-based resin composition may contain various components in addition to the above components. For example, the styrene-based resin composition may contain a foaming agent, which is the component (G) described later. The foaming agent may be added to the styrene-based resin composition in the foaming step of the styrene-based resin composition described later, or a foam nucleating agent may be added to the styrene-based resin composition in advance before the styrene-based resin composition is foamed.

The styrene-based resin composition may contain various additives within a range that that does not impair the effects of the present invention. Examples of additives include known resin additives, such as light stabilizers, UV-absorbing agents, UV-stabilizing agents, heavy-metal-deactivating agents, impact-strength-improving agents, colorants, lubricants, anti-drip agents, crystal-nucleating agents, antistatic agents, and compatibilizing agents. When the styrene-based resin composition contains an additive, the content thereof may be, for example, 10 mass% or less, preferably 5 mass% or less, more preferably 1 mass% or less, and particularly preferably 0.1 mass% or less, based on the mass of the styrene-based resin.

The method for preparing the styrene-based resin composition is not particularly limited, and can be, for example, the same as a method for preparing known styrene-based resin compositions for foaming. For example, the styrene-based resin composition can be prepared by mixing the flame retardant composition, the component (A), and one or more optional components to be added, at a predetermined mixing ratio.

The styrene-based resin composition can be used to form a foamed molded article, for example, by various foaming methods. For example, an extrusion-foamed molded article of the styrene-based resin composition can be obtained by extrusion-foaming the styrene-based resin composition.

The method for producing the extrusion-foamed molded article is not particularly limited, and, for example, a wide range of known production methods can be used. For example, the extrusion-foamed molded article can be produced by a production method comprising the following extrusion foam molding step. Extrusion foaming step: melt-mixing the styrene-based resin composition in an extruder, introducing a foaming agent (G) as the component (G) under pressure into the extruder, and then extruding the mixture through the die of the extruder to the atmosphere.

The styrene-based resin is foamed and molded by the extrusion foaming step, thereby obtaining an extrusion-foamed molded article of the styrene-based resin composition.

In the extrusion foaming step, the component (A), the component (B1), the component (C), and the component (D) may be fed into the extruder in any order and melt-mixed in the extruder, and the mixture may be foamed and molded. Alternatively, some or all of the components may be mixed in advance to form a mixture, and then the mixture may be fed into the extruder.

As the foaming agent, for example, a wide range of known foaming agents usable for foam molding can be used. Specific examples include volatile organic foaming agents, such as propane, butane, isobutane, pentane, cyclopentane, hexane, cyclohexane, 1-chloro-1,1-difluoroethane, monochlorodifluoromethane, monochloro-1,2,2,2-tetrafluoroethane, 1,1-difluoroethane, 1,1,1,2-tetrafluoroethane, 1,1,3,3,3-pentafluoropropane, dichloromethane, 1,2-dichloroethane, dimethyl ether, diethyl ether, and ethyl methyl ether; inorganic foaming agents, such as water, nitrogen, and carbon dioxide; chemical foaming agents, such as azo compounds; and the like. The foaming agents may be used singly or in a combination of two or more.

The amount of the foaming agent can be appropriately set according to the properties of a desired foamed article, the molding method used, etc. For example, the amount of the foaming agent may be 0.01 to 20 parts by mass, preferably 0.1 to 10 parts by mass, and more preferably 0.5 to 5 parts by mass, based on 100 parts by mass of the styrene-based resin.

The extrusion-foamed molded article of the styrene-based resin composition obtained as described above contains at least the component (A), the component (B1), the component (C), and the component (D). Thus, the extrusion-foamed molded article has excellent flame retardancy and excellent heat resistance. The extrusion-foamed molded article can therefore be used for various applications in which, for example, high flame retardancy levels are required.

### Examples

The present invention is described in detail below with reference to Examples; however, the present invention is not limited to these Examples.

The starting materials used in the Examples and Comparative Examples are as follows.

### Component (A)

### (A) Styrene-based resin

- GP-PS (PSJ Polystyrene G9305 produced by PS Japan Corporation)

### Component (B1)

Tetrabromobisphenol A-bis(2,3-dibromo-2-methylpropyl ether) (PYROGUARD SR-130 produced by DKS Co. Ltd.)

### Component (B2)

- B2-1: Tetrabromobisphenol A-bis(2,3-dibromopropyl ether) (PYROGUARD SR-720N produced by DKS Co. Ltd.)
- B2-2: Tris(2,3-dibromopropyl)isocyanurate (PYROGUARD SR-750 produced by DKS Co. Ltd.)
- B2-3: Tris(tribromophenoxy)triazine (PYROGUARD SR-245 produced by DKS Co. Ltd.)
- B2-4: Brominated epoxy oligomer (YDB-406 produced by Nippon Steel Chemical & Material Co., Ltd.)

### Other flame retardants

- B2-5: Hexabromocyclododecane (PYROGUARD SR-103 produced by DKS Co. Ltd.)

### Component (C)

### (C) Zinc-modified hydrotalcite

- C-1: Mg_{3.5}Zn_{0.5}Al₂(OH)₁₂CO₃·mH₂0 (STABIACE HT-7 produced by Sakai Chemical Industry Co., Ltd.)
- C-2: Mg₃ZnAl₂(OH)₁₂CO₃·mH₂O (ZHT-4A produced by Kyowa Chemical Industry Co., Ltd.)

### Zinc-free hydrotalcite

- C-3: Mg_{4.3}Al₂(OH)_{12.6}CO₃·mH₂O (DHT-4A produced by Kyowa Chemical Industry Co., Ltd.)

### Component (D)

### (D) Phosphoric acid ester compound

- D-1: Triphenyl phosphate (TPP produced by Daihachi Chemical Industry Co., Ltd.)
- D-2: Tricresyl phosphate (TCP produced by Daihachi Chemical Industry Co., Ltd.)
- D-3: Triphenyl phosphite (TP-I produced by Daihachi Chemical Industry Co., Ltd.)
- D-4: Tris(tribromoneopentyl)phosphate (CR-900 produced by Daihachi Chemical Industry Co., Ltd.)
- D-5: Tricresyl phosphite (TXP produced by Daihachi Chemical Industry Co., Ltd.)
- D-6: Halogen-free phosphoric acid ester (DAIGUARD-1000 produced by Daihachi Chemical Industry Co., Ltd.)
- D-7: Cresyl di-2 6-xylenyl phosphate (PX-110 produced by Daihachi Chemical Industry Co., Ltd.)
- D-8: resorcinol bis(diphenyl phosphate) (CR-733S produced by Daihachi Chemical Industry Co., Ltd.)
- D-9: bisphenol A bis(diphenyl phosphate) (CR-741 produced by Daihachi Chemical Industry Co., Ltd.)
- D-10: resorcinol bis(dixylenyl phosphate) (PX-200 produced by Daihachi Chemical Industry Co., Ltd.)

### Component (E)

### (E) Heat stabilizer

Bis(2,6-di-tert-butyl-4-methylphenyl)pentaerythritol diphosphite (ADK STAB PEP-36 produced by ADEKA Corporation)

### Component (F)

### (F) Flame retardancy enhancer

- F-1: 2,3-Dimethyl-2,3-diphenylbutane (NOFMER BC-90 produced by NOF Corporation)
- F-2: Synthetic zeolite (Zeolum A-3 produced by Tosoh Corporation)

### Component (G)

### (G) Foaming agent

- G-1: Isobutane
- G-2: Dimethyl ether

### Component (H)

### (H) Foam nucleating agent

- Talc MS (produced by Nippon Talc Co., Ltd.)

### Example 1

The components, except a foaming agent, were placed in an extruder with a diameter of 65 mm in the amounts shown in Table 1 below, the inside of the extruder was heated to 200°C to melt and plasticize the mixture, and kneading was continued, thereby preparing a styrene-based resin composition in the extruder. The extruder was a twin-stage extruder including an extruder with a diameter of 65 mm and an extruder with a diameter of 90 mm in series. As shown in Table 1, the amounts of the components were as follows: the amount of the component (A) was 100 parts by mass, the amount of the component (B1) was 1.2 parts by mass, the amount of B2-1 as the component (B2) was 1.8 parts by mass, the amount of C-1 as the component (C) was 0.1 parts by mass, the amount of D-1 as the component (D) was 1.0 part by mass, and the amount of the component (E) was 0.05 parts by mass.

Subsequently, a predetermined amount of the foaming agent was introduced under pressure through a separate line to the end of the 65-mm extruder (the side opposite to the die of the extruder with a diameter of 90 mm). Then, the resin temperature (the temperature in the extruder) was cooled to 120°C in the extruder with a diameter of 90 mm. As shown in Table 1, 3 parts by mass of foaming agent G-1 and 3 parts by mass of foaming agent G-2 were used as the component (G) (based on 100 parts by mass of the styrene-based resin). Thereafter, the resin composition was extruded to the atmosphere through a die lip with a rectangular cross section of 2.5 mm (thickness direction) x 45 mm (width direction) provided at an end of the extruder with a diameter of 90 mm. An extrusion-foamed molded article of a styrene-based resin with a rectangular parallelepiped shape was thereby obtained.

### Examples 2 to 31

Extrusion-foamed molded articles were obtained in the same manner as in Example 1, except that the type and amount of each component were changed as shown in Tables 1 and 2.

### Comparative Examples 1 to 10

Extrusion-foamed molded articles were obtained in the same manner as in Example 1, except that the type and amount of each component were changed as shown in Table 3.

### Evaluation Method

### Flame Retardancy

The oxygen index was measured according to JISK-7201, and the flame retardancy properties were evaluated based on the following criteria.
Good: The oxygen index was 29 or more, and excellent flame retardancy was attained.
Poor: The oxygen index was less than 29, and excellent flame retardancy was not attained.

### Heat Resistance

The heat resistance of the foamed molded articles obtained in the Examples and the Comparative Examples was evaluated according to the degree of yellowing (YI: yellow index) of the foamed molded articles. Specifically, each extrusion-foamed molded article in the test was sliced with a cutter to obtain a board, and it was compressed with biaxial rolls and then cracked with a grinder. The cracked material was placed in a Labo Plastomill, melted and kneaded at 200°C, immediately taken out, and then molded into a plate shape with a thickness of 3.2 mm by using a cooling press. The plate-shaped molded article obtained as described above was heated with a hot press at 220°C for 40 minutes, and then cooled with a cooling press. The cooled plate-shaped molded article was dissolved in methylene chloride so that the content was 10 mass%. The solution was filtered through a 0.45-µm-filter, and the resulting solution was used as a heat resistance test sample. The YI value of the sample was measured by a transmission method using a spectrophotometric color difference meter (SE-6000 produced by Nippon Denshoku Industries Co., Ltd.).

Tables 1 and 2 show the amounts of the components used in the Examples and the evaluation results of the obtained foamed molded articles.

**Table 1**

| Type of each component and evaluation item | | Example | | | | | | | | | | | | | | | | |
|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 |
| Component (A) Styrene-based resin | A | 100 | 100 | 100 | 100 | 100 | 100 | 100 | 100 | 100 | 100 | 100 | 100 | 100 | 100 | 100 | 100 | 100 |
| Component (B1) Bromine-containing flame retardant | B1 | 1.2 | 1.0 | 1.5 | 1.5 | 1.5 | 0.9 | 1.2 | 1.2 | 1.8 | 1.5 | 1.0 | 1.5 | 2.0 | 1.8 | 1.0 | 3.0 | 1.5 |
| Component (B2) Bromine-containing flame retardant and other flame retardants | B2-1 | 1.8 | 1.0 | 1.5 | 1.5 | 1.5 | 2.1 | 0 | 1.8 | 1.2 | 2.5 | 3.0 | 2.5 | 6.0 | 1.2 | 1.0 | 0 | 1.5 |
| | B2-2 | 0 | 0 | 0 | 0 | 0 | 0 | 1.8 | 0 | 0 | 0 | 0 | 0 | 0 | 0 | 0 | 0 | 0 |
| | B2-3 | 0 | 0 | 0 | 0 | 0 | 0 | 0 | 0.5 | 0 | 0 | 0 | 0 | 0 | 0 | 0 | 0 | 0 |
| | B2-4 | 0 | 0 | 0 | 0 | 0 | 0 | 0 | 0 | 0.3 | 0 | 0 | 0 | 0 | 0 | 0 | 0 | 0 |
| | B2-5 | 0 | 0 | 0 | 0 | 0 | 0 | 0 | 0 | 0 | 0 | 0 | 0 | 0 | 0 | 0 | 0 | 0 |
| Component (C) Zinc-modified hydrotalcite | C-1 | 0.1 | 0 | 0.1 | 0.15 | 0.15 | 0.1 | 0 | 0.1 | 0.2 | 0 | 0.08 | 0 | 0.3 | 0 | 0.05 | 0.25 | 0.1 |
| | C-2 | 0 | 0.05 | 0 | 0 | 0 | 0 | 0.05 | 0 | 0 | 0.1 | 0 | 0.1 | 0 | 0.2 | 0 | 0 | 0 |
| Zinc-free hydrotalcite | C-3 | 0 | 0 | 0 | 0 | 0 | 0 | 0 | 0 | 0 | 0 | 0 | 0 | 0 | 0 | 0 | 0 | 0 |
| Component (D) Phosphoric acid ester | D-1 | 1.0 | 2.0 | 1.0 | 0 | 0 | 1.0 | 1.0 | 0.8 | 1.0 | 0 | 0.5 | 0 | 0 | 0.1 | 3.0 | 2.0 | 0 |
| | D-2 | 0 | 0 | 0 | 1.0 | 0 | 0 | 0 | 0 | 0 | 0.8 | 0 | 0 | 0 | 0 | 0 | 0.0 | 0 |
| | D-3 | 0 | 0 | 0 | 0 | 0.5 | 0 | 0 | 0 | 0 | 0 | 0 | 1.0 | 0.5 | 0 | 0 | 0.0 | 0 |
| | D-4 | 0 | 0 | 0 | 0 | 0 | 0 | 0 | 0 | 0 | 0 | 0 | 0 | 0 | 0 | 0 | 0 | 0.80 |
| Component (E) Heat stabilizer | E | 0.05 | 0 | 0.05 | 0.05 | 0.05 | 0.05 | 0.05 | 0.1 | 0.1 | 0.05 | 0.05 | 0.1 | 0.05 | 0.1 | 0.05 | 0.05 | 0.1 |
| Component (F) Flame retardancy enhancer | F-1 | 0 | 0 | 0 | 0 | 0 | 0 | 0 | 0 | 0 | 0 | 0.1 | 0 | 0 | 0 | 0 | 0 | 0 |
| | F-2 | 0 | 0 | 0 | 0 | 0 | 0 | 0 | 0 | 0 | 0 | 0 | 0.05 | 0 | 0 | 0 | 0 | 0 |
| Component (G) Foaming agent | G-1 | 3 | 3 | 3 | 3 | 3 | 3 | 3 | 3 | 3 | 3 | 3 | 3 | 3 | 3 | 3 | 3 | 3 |
| | G-2 | 3 | 3 | 3 | 3 | 3 | 3 | 3 | 3 | 3 | 3 | 3 | 3 | 3 | 3 | 3 | 3 | 3 |
| Component (H) Foam nucleating agent | H | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.0 | 1.00 |
| Evaluation | Flame retardanc y | Good | Good | Good | Good | Good | Good | Good | Good | Good | Good | Good | Good | Good | Good | Good | Good | Good |
| | Heat resistance (Yl value) | 6 | 7 | 11 | 8 | 6 | 3 | 13 | 9 | 11 | 11 | 8 | 14 | 10 | 5 | 3 | 15 | 12 |

**Table 2**

| Type of each component and evaluation item | | Example | | | | | | | | | | | | | |
|---|---|---|---|---|---|---|---|---|---|---|---|---|---|---|---|
| | | 18 | 19 | 20 | 21 | 22 | 23 | 24 | 25 | 26 | 27 | 28 | 29 | 30 | 31 |
| Component (A) Styrene-based resin | A | 100 | 100 | 100 | 100 | 100 | 100 | 100 | 100 | 100 | 100 | 100 | 100 | 100 | 100 |
| Component (B1) Bromine-containing flame retardant | B1 | 1.0 | 2.5 | 1.0 | 2.5 | 1.0 | 2.5 | 1.0 | 2.5 | 1.0 | 2.5 | 1.0 | 2.5 | 1.0 | 2.5 |
| Component (B2) Bromine-containing flame retardant and other flame retardants | B2-1 | 1.0 | 2.5 | 1.0 | 2.5 | 1.0 | 2.5 | 1.0 | 2.5 | 1.0 | 2.5 | 1.0 | 2.5 | 1.0 | 2.5 |
| | B2-2 | 0 | 0 | 0 | 0 | 0 | 0 | 0 | 0 | 0 | 0 | 0 | 0 | 0 | 0 |
| | B2-3 | 0 | 0 | 0 | 0 | 0 | 0 | 0 | 0 | 0 | 0 | 0 | 0 | 0 | 0 |
| | B2-4 | 0 | 0 | 0 | 0 | 0 | 0 | 0 | 0 | 0 | 0 | 0 | 0 | 0 | 0 |
| | B2-5 | 0 | 0 | 0 | 0 | 0 | 0 | 0 | 0 | 0 | 0 | 0 | 0 | 0 | 0 |
| Component (C) Zinc-modified hydrotalcite | C-1 | 0.05 | 0.3 | 0.05 | 0.3 | 0.05 | 0.3 | 0.05 | 0.3 | 0.05 | 0.3 | 0.05 | 0.3 | 0.05 | 0.3 |
| | C-2 | 0 | 0 | 0 | 0 | 0 | 0 | 0 | 0 | 0 | 0 | 0 | 0 | 0 | 0 |
| Zinc-free hydrotalcite | C-3 | 0 | 0 | 0 | 0 | 0 | 0 | 0 | 0 | 0 | 0 | 0 | 0 | 0 | 0 |
| Component (D) Phosphoric acid ester | D-1 | 0 | 0 | 0 | 0 | 0 | 0 | 0 | 0 | 0 | 0 | 0 | 0 | 0 | 0 |
| | D-2 | 0 | 0 | 0 | 0 | 0 | 0 | 0 | 0 | 0 | 0 | 0 | 0 | 0 | 0 |
| | D-3 | 0 | 0 | 0 | 0 | 0 | 0 | 0 | 0 | 0 | 0 | 0 | 0 | 0 | 0 |
| | D-4 | 0.4 | 1.5 | 0 | 0 | 0 | 0 | 0 | 0 | 0 | 0 | 0 | 0 | 0 | 0 |
| | D-5 | 0 | 0 | 0.4 | 1.5 | 0 | 0 | 0 | 0 | 0 | 0 | 0 | 0 | 0 | 0 |
| | D-6 | 0 | 0 | 0 | 0 | 0.4 | 1.5 | 0 | 0 | 0 | 0 | 0 | 0 | 0 | 0 |
| | D-7 | 0 | 0 | 0 | 0 | 0 | 0 | 0.4 | 1.5 | 0 | 0 | 0 | 0 | 0 | 0 |
| | D-8 | 0 | 0 | 0 | 0 | 0 | 0 | 0 | 0 | 0.4 | 1.5 | 0 | 0 | 0 | 0 |
| | D-9 | 0 | 0 | 0 | 0 | 0 | 0 | 0 | 0 | 0 | 0 | 0.4 | 1.5 | 0 | 0 |
| | D-10 | 0 | 0 | 0 | 0 | 0 | 0 | 0 | 0 | 0 | 0 | 0 | 0 | 0.4 | 1.5 |
| Component (E) Heat stabilizer | E | 0.05 | 0.05 | 0.05 | 0.05 | 0.05 | 0.05 | 0.05 | 0.05 | 0.05 | 0.05 | 0.05 | 0.05 | 0.05 | 0.05 |
| Component (F) Flame retardancy enhancer | F-1 | 0 | 0 | 0 | 0 | 0 | 0 | 0 | 0 | 0 | 0 | 0 | 0 | 0 | 0 |
| | F-2 | 0 | 0 | 0 | 0 | 0 | 0 | 0 | 0 | 0 | 0 | 0 | 0 | 0 | 0 |
| Component (G) Foaming agent | G-1 | 3 | 3 | 3 | 3 | 3 | 3 | 3 | 3 | 3 | 3 | 3 | 3 | 3 | 3 |
| | G-2 | 3 | 3 | 3 | 3 | 3 | 3 | 3 | 3 | 3 | 3 | 3 | 3 | 3 | 3 |
| Component (H) Foam nucleating agent | H | 1.0 | 1.0 | 1.0 | 1.0 | 1.0 | 1.0 | 1.0 | 1.0 | 1.0 | 1.0 | 1.0 | 1.0 | 1.0 | 1.0 |
| Evaluation | Flame retardancy | Good | Good | Good | Good | Good | Good | Good | Good | Good | Good | Good | Good | Good | Good |
| | Heat resistance (Yl value) | 6 | 14 | 4 | 13 | 4 | 13 | 5 | 13 | 5 | 12 | 5 | 12 | 5 | 13 |

Table 3 show the amounts of the components used in the Comparative Examples and the evaluation results of the obtained foamed molded articles.

**Table 3**

| Type of each component and evaluation item | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| Component (A) Styrene-based resin | A | 100 | 100 | 100 | 100 | 100 | 100 | 100 | 100 | 100 | 100 |
| Component (B1) Bromine-containing flame retardant | B1 | 1.5 | 1.5 | 1.5 | 0 | 0 | 0 | 0 | 0 | 1.5 | 1.5 |
| Component (B2) Bromine-containing flame retardant and other flame retardants | B2-1 | 1.5 | 1.5 | 1.5 | 3.0 | 0 | 0 | 0 | 0 | 1.5 | 1.5 |
| | B2-2 | 0 | 0 | 0 | 0 | 3.0 | 0 | 0 | 0 | 0 | 0 |
| | B2-3 | 0 | 0 | 0 | 0 | 0 | 3.0 | 0 | 0 | 0 | 0 |
| | B2-4 | 0 | 0 | 0 | 0 | 0 | 0 | 3.0 | 0 | 0 | 0 |
| | B2-5 | 0 | 0 | 0 | 0 | 0 | 0 | 0 | 3.0 | 0 | 0 |
| Component (C) Zinc-modified hydrotalcite | C-1 | 0.1 | 0 | 0 | 0.1 | 0.1 | 0.1 | 0.1 | 0.1 | 0 | 0.1 |
| | C-2 | 0 | 0 | 0 | 0 | 0 | 0 | 0 | 0 | 0.05 | 0 |
| Zinc-free hydrotalcite | C-3 | 0 | 0 | 0.1 | 0 | 0 | 0 | 0 | 0 | 0 | 0 |
| Component (D) Phosphoric acid ester | D-1 | 0 | 1.0 | 1.0 | 1.0 | 1.0 | 1.0 | 1.0 | 1.0 | 0 | 0 |
| | D-2 | 0 | 0 | 0 | 0 | 0 | 0 | 0 | 0 | 0 | 0 |
| | D-3 | 0 | 0 | 0 | 0 | 0 | 0 | 0 | 0 | 0 | 0 |
| | D-4 | 0 | 0 | 0 | 0 | 0 | 0 | 0 | 0 | 0 | 0 |
| Component (E) Heat stabilizer | E | 0.05 | 0.05 | 0.05 | 0.05 | 0.05 | 0.05 | 0.05 | 0.05 | 0.05 | 0.05 |
| Component (F) Flame retardancy enhancer | F-1 | 0 | 0 | 0 | 0 | 0 | 0 | 0 | 0 | 0 | 0 |
| | F-2 | 0 | 0 | 0 | 0 | 0 | 0 | 0 | 0 | 0.05 | 0.1 |
| Component (G) Foaming agent | G-1 | 3 | 3 | 3 | 3 | 3 | 3 | 3 | 3 | 3 | 3 |
| | G-2 | 3 | 3 | 3 | 3 | 3 | 3 | 3 | 3 | 3 | 3 |
| Component (H) Foam nucleating agent | H | 1.0 | 1.0 | 1.0 | 1.0 | 1.0 | 1.0 | 1.0 | 1.0 | 1.0 | 1.0 |
| Evaluation | Flame retardancy | Poor | Poor | Poor | Poor | Poor | Poor | Poor | Good | Poor | Poor |
| | Heat resistance (YI value) | 9 | 10 | 2 | 1 | 2 | 7 | 5 | 28 | 9 | 15 |

As is clear from Table 1, the extrusion-foamed articles of styrene-based resin prepared in the Examples had excellent flame retardancy and also had low YI values, indicating that they were also excellent in heat resistance. In contrast, since the extrusion-foamed articles of styrene-based resin prepared in the Comparative Examples were not formed from a composition containing all of the components (A) to (D), none of them satisfied both flame retardancy and heat resistance. The above results show that an extrusion-foamed article obtained from a flame-retardant expandable styrene-based resin composition containing the components (A) to (D) has excellent flame retardancy and excellent heat resistance.

## Claims

1. A flame retardant composition for expandable styrene resin, comprising at least the following components (B1), (C), and (D):
(B1) tetrabromobisphenol A-bis(2,3-dibromo-2-methylpropyl ether);
(C) a zinc-modified hydrotalcite; and
(D) a phosphoric acid ester-based compound,
the component (B1) being contained in an amount of 10 to 98 mass% based on the total amount of the component (B1) and the component (D).

2. The flame retardant composition for expandable styrene resin according to claim 1, wherein the component (D) is at least one member selected from the group consisting of aliphatic phosphates, aromatic phosphates, and aromatic phosphites.

3. The flame retardant composition for expandable styrene resin according to claim 1 or 2, wherein the flame retardant composition comprises a component (B2) as a flame retardant in addition to the component (B1), and the component (B2) comprises at least one member selected from the group consisting of tetrabromobisphenol A-bis(2,3-dibromopropyl ether), tris(2,3-dibromopropyl)isocyanurate, tris(tribromophenoxy)triazine, and brominated epoxy oligomer.

4. The flame retardant composition for expandable styrene resin according to any one of claims 1 to 3, wherein the content of the component (B1) is 80 to 99 mass% based on the total amount of the component (B1) and the component (C).

5. A flame-retardant expandable styrene-based resin composition comprising the flame retardant composition for expandable styrene resin according to any one of claims 1 to 4, and a styrene-based resin as a component (A).

6. The flame-retardant expandable styrene-based resin composition according to claim 5, wherein the component (D) is contained in an amount of 0.05 parts by mass or more and 10 parts by mass or less, based on 100 parts by mass of the component (A).

7. An extrusion-foamed molded article of the flame-retardant expandable styrene-based resin composition according to claim 5 or 6.
